# EUROPEAN PATENT APPLICATION

(11) **EP 4 428 608 A1**
(43) Date of publication of application: **11.09.2024**
(21) Application number: 24154983.1
(22) Date of filing: 31.01.2024
(51) Int. Cl.: G02F 1/1675, G02F 1/167, G02F 1/16755, G02F 1/16757, G02F 1/1676, C25D 13/12

(54) **SYSTEMS AND METHODS FOR FORMING A DYNAMIC DISPLAY**

(30) Priority: 08.03.2023 US 202318180182
(71) Applicant: The Boeing Company, Arlington, VA 22202 (US)
(72) Inventor: GREENE, Edward, Arlington, 22202 (US); ADAMS, Scott Allan, Arlington, 22202 (US)
(74) Representative: Morrall, Jonathan Ian McLachlan

(57) **Abstract**

A method for providing an electrophoretic display includes applying one or more fluids onto a surface of a substrate. The one or more fluids include a conductive coating, microcapsules, and a clear coat. Said applying forms the electrophoretic display on the surface of the substrate.

## Description

### FIELD OF THE DISCLOSURE

Examples of the present disclosure generally relate to systems and methods for forming a dynamic display, which can be disposed on or within a vehicle.

### BACKGROUND OF THE DISCLOSURE

Aircraft are used to transport passengers and cargo between various locations. Decorative surfaces are created within interior cabins of various types of aircraft. Such decorative surfaces can be formed by using paint, ink, or similar fluid material. The decorative surfaces are typically static, and cannot be changed. Conversely, electronic displays (such as light emitting diode or liquid crystal displays) are configured to provide changeable content, but require significant power, can be large and bulky, and may exhibit inconsistent visibility under different conditions (such as if sunlight is shining thereon).

### SUMMARY OF THE DISCLOSURE

A need exists for a system and a method for forming a dynamic display, such as can be used within an interior cabin of a vehicle. Also, a need exists for a dynamic display that is lighter and/or smaller than typical electronic displays, and which uses less power than typical electronic displays.

With those needs in mind, certain examples of the present disclosure provide a method for providing an electrophoretic display. The method includes applying one or more fluids onto a surface of a substrate. The one or more fluids include a conductive coating, microcapsules, and a clear coat. Said applying forms the electrophoretic display on the surface of the substrate.

In at least one example, the substate is on or within an aircraft.

In at least one example, said applying includes using an applicator having one or more nozzles, wherein the one or more fluids are emitted from the one or more nozzles. The applicator can an inkjet printhead or a paint atomizer. The applicator can be a robot including a base, one or more articulating arms, and an end effector including the one or more nozzles.

The one or more fluids can include one or more paints.

In at least one example, said applying comprises applying a single fluid including the conductive coating, the microcapsules, and the clear coat onto the surface of the substrate. In at least one other example, said applying includes applying a first fluid including the conductive coating onto the surface of the substrate; applying a second fluid including the microcapsules over the conductive coating; and applying a third fluid including the clear coat over the microcapsules. In at least one other example, said applying includes applying a first fluid including the conductive coating and the microcapsules onto the surface of the substrate; and applying a second fluid including the clear coat over the conductive coating and the microcapsules. In at least one other example, said applying includes applying a first fluid including the conductive coating onto the surface of the substrate; and applying a second fluid including the microcapsules and the clear coat over the conductive coating.

In at least one example, the method also includes coupling the electrophoretic display to a driver card; and coupling the driver card to a control unit.

In at least one example, the microcapsules include charged particles within ink particles suspended in a clear fluid.

Certain examples of the present disclosure provide a system for providing an electrophoretic display. The system includes an applicator configured to apply one or more fluids onto a surface of a substrate. The one or more fluids include a conductive coating, microcapsules, and a clear coat. The electrophoretic display is formed on the surface of the substrate by the one or more fluids applied by the applicator.

### BRIEF DESCRIPTION OF THE DRAWINGS

Figure 1 illustrates a simplified block diagram of a system for forming an electrophoretic display on a substrate, according to an example of the present disclosure.
Figure 2 illustrates a flow chart of a method, according to an example of the present disclosure.
Figure 3 illustrates a perspective view of an applicator, according to an example of the present disclosure.
Figure 4 illustrates a schematic diagram of an electrophoretic display, according to an example of the present disclosure.
Figure 5 illustrates a simplified representation of a microcapsule, according to an example of the present disclosure.
Figure 6 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

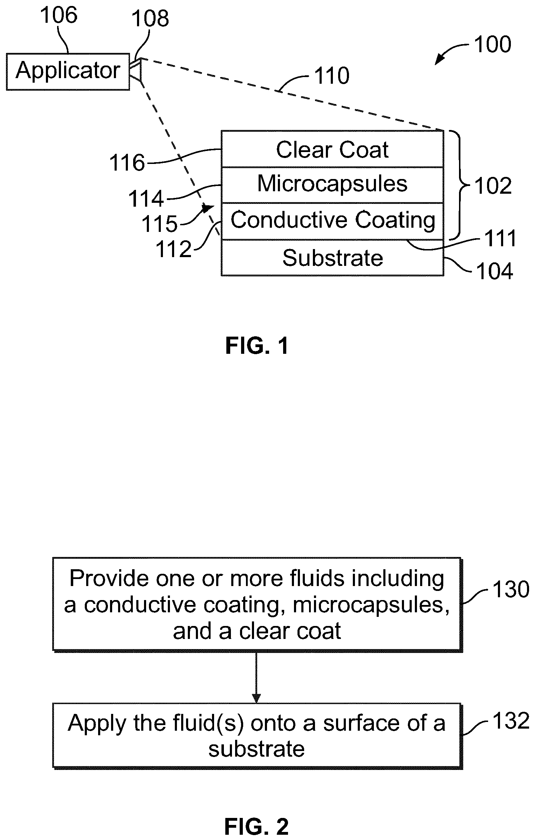

Figure 1 illustrates a simplified block diagram of a system 100 for forming an electrophoretic display 102 on a substrate 104, according to an example of the present disclosure. The substrate 104 can be formed of a metal, such as aluminum, steel, or the like. As another example, the substrate 104 can be formed of a composite material. The substrate 104 can be flat or have a curved and/or contoured surface. In at least one example, the substrate 104 is on or within a vehicle, such as a commercial aircraft. For example, the substrate 104 can be disposed on a wall, ceiling, floor, stowage bin, seat, or the like within an internal cabin of the vehicle.

An applicator 106 includes one or more nozzles 108 that emit a fluid 110, such as a paint, onto a surface 111 of the substrate 104. The fluid 110 can be a liquid electrophoretic paint. In at least one example, the fluid 110 includes a conductive coating 112, microcapsules 114, and a clear coat 116 mixed together. The clear coat 116 provides a protective sealing barrier, and can prevent the microcapsules 114 from moving. The microcapsules 114 are electrophoretic capsules that contain pigment, which can change appearance when subjected to an applied voltage. The conductive coating 112 provides the voltage used to manipulate pigment in the microcapsules 114.

In at least one example, the applicator 106 applies the electrophoretic paint having the conductive coating 112, the microcapsules 114, and the clear coat 116 mixed together as a single fluid. As another example, the conductive coating 112 and the microcapsules 114 can be mixed together and first applied as a fluid 110 on the surface 111 of the substrate 104 before a fluid 110 in the form of a clear coat 116 is applied over the intermixed conductive coating 112 and microcapsules 114. That is, a first fluid 110 including the conductive coating 112 and the microcapsules 114 in liquid or aerosolized form is first applied to the substrate by the applicator 106, and then a second fluid 110 including the clear coat in liquid or aerosolized form is subsequently applied by the applicator 106 over the conductive coating 112 and the microcapsules 114.

In at least one other example, the applicator 106 first applies a first fluid 110 including the conductive coating 112 onto the surface 111 of the substrate 104. Next, the applicator 106 applies a second fluid 110 including the microcapsules 114 over and onto the conductive coating 112, which was previously deposited by the applicator 106. Finally, the applicator 106 applies a third fluid 110 including the clear coat 116 is applied over and onto the microcapsules 114, which was previously deposited by the applicator 106.

The conductive coating 112 can be formed of one or more conductive materials, such as conductive inks. The clear coat 116 can be a clear, base coat, such as a clear resin. The microcapsules 114 are able to be seen through the transparent clear coat 116. The clear coat 116 provides a barrier that protects the microcapsules from being damaged.

The applicator 106 applies one or more fluids 110 including the conductive coating 112, the microcapsules 114, and the clear coat 116 onto the substrate 104 to form the electrophoretic display 102 on the surface 111 of the substrate 104. forming a dynamic display. The applicator 106 applies electronic ink 115 and the conductive coating 112 directly on the surface 111 of the substrate 104, such as within an internal cabin of a vehicle. The electronic ink 115 includes the microcapsules 114 (for examples, millions or more). The microcapsules 114 contain charged pigments that can be manipulated when electricity is applied via the conductive coating 112, thereby creating a dynamic appearance, as desired. The electrophoretic display 102 is configured to retain an appearance with no power required until desired, thereby providing a changeable display that consumes less power than light emitting diode or liquid crystal displays.

In at least one example, the applicator 106 includes an inkjet print head or paint atomizer. The applicator 106 can be integrated into a robot, a gantry end effector, and/or the like. The applicator 106 can first deposit the conductive coating 112 as a first layer, and the microcapsules 114 as a second layer. The conductive coating 112 provides electrical continuity to manipulate pigment within the microcapsules 114. The clear coat 116, which provides a protective barrier for the microcapsules 114 and the conductive layer 112, can then be deposited by the applicator 106 as a third layer. The electrophoretic display 102 can be directly integrated onto various surfaces, such as flat surfaces, curved surfaces, and the like.

The electrophoretic display 102 is configured to be dynamically changed, so that appearances thereof can be changed on demand, as desired. Such dynamic changing is enabled by the electronic ink 115, which includes the microcapsules 114 that contain charged pigment, such as black and white pigment. The visible color depends on the charge imparted on the pigment(s). For example, a black pigment may be positively charged, and a white pigment may be negatively charged. Each microcapsule 114 contains charged colored pigments, such as black and white, which can be manipulated by an electric field to create a desired appearance.

The electrophoretic display 102 within an interior cabin of a vehicle, such as a commercial aircraft, provides various aesthetic advantages, which can be selectively changed, as desired. The systems and methods described herein allow for electrophoretic displays to be fluidly formed on various surfaces, whether flat or curved. In contrast, typical electrophoretic displays are provided by flat conductive films or thin film transistors that have limited flexibility. Flexing such displays may result in damage thereto. As such, typical electrophoretic displays are generally not amenable parts to complex curvatures. In contrast, examples of the present disclosure provide systems and methods configured to apply the electrophoretic display 102, via the one or more fluids 110, directly on the surface 111 of the substrate 104, thereby allowing the formed electrophoretic display 102 to conform to the surface 111.

Figure 2 illustrates a flow chart of a method, according to an example of the present disclosure. Referring to Figures 1 and 2, the method include providing, at 130, one or more fluids 110 including the conductive coating 112, the microcapsules 114, and the clear coat 116. In at least one example, the fluid(s) 110 include one or more liquids, such as a paint. As another example, the fluid(s) 110 can include one or more aerosols. As another example, the fluid(s) 110 can include one or more gases that are configured to condense as liquids as they are deposited onto the substrate 104.

The method also includes applying, at 132, the fluid(s) 110 onto the surface 111 of the substrate 104. The applying provides the electrophoretic display 102 on the surface 111 of the substrate 104.

In at least one example, the applying 132 includes applying a single fluid 110 including the conductive coating 112, the microcapsules 114, and the clear coat 116 onto the surface 111 of the substrate 104. As another example, the applying 132 includes applying a first fluid 110 including the conductive coating 112 onto the surface 111 of the substrate 104, applying a second fluid 110 including the microcapsules 114 over the conductive coating 112, and applying a third fluid 110 including the clear coat 116 over the microcapsules 114. As another example, the applying 132 includes applying a first fluid 110 including the conductive coating 112 and the microcapsules 114 onto the surface 111 of the substrate 104, and applying a second fluid 110 including the clear coat 116 over the conductive coating 112 and the microcapsules 114. As another example, the applying 132 includes applying a first fluid 110 including the conductive coating 112 onto the surface 111 of the substrate 104, and applying a second fluid 110 including the microcapsules 114 and the clear coat 116 over the conductive coating 112.

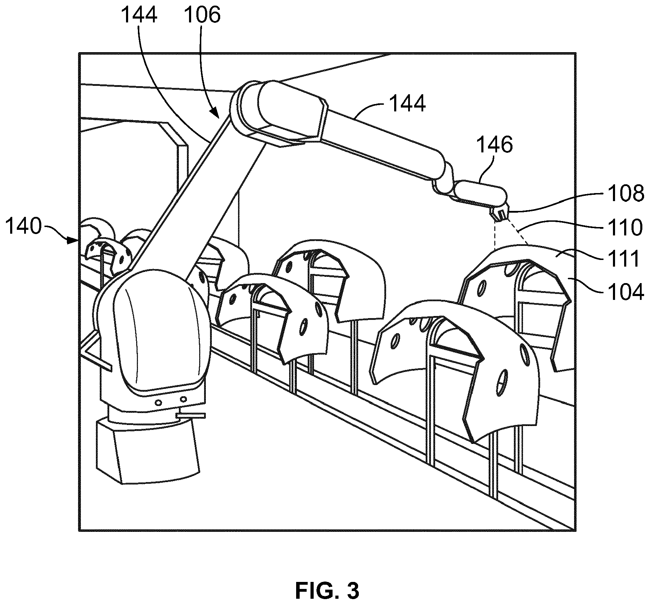

Figure 3 illustrates a perspective view of an applicator 106, according to an example of the present disclosure. In at least one example, the applicator 106 is a robot 140 including a base 142, one or more articulating arms 144, and an end effector 146 including the nozzle(s) 108. The applicator 106 deposits the fluid(s) 110 onto a surface 111 of a substrate 104, which can include complex curvatures.

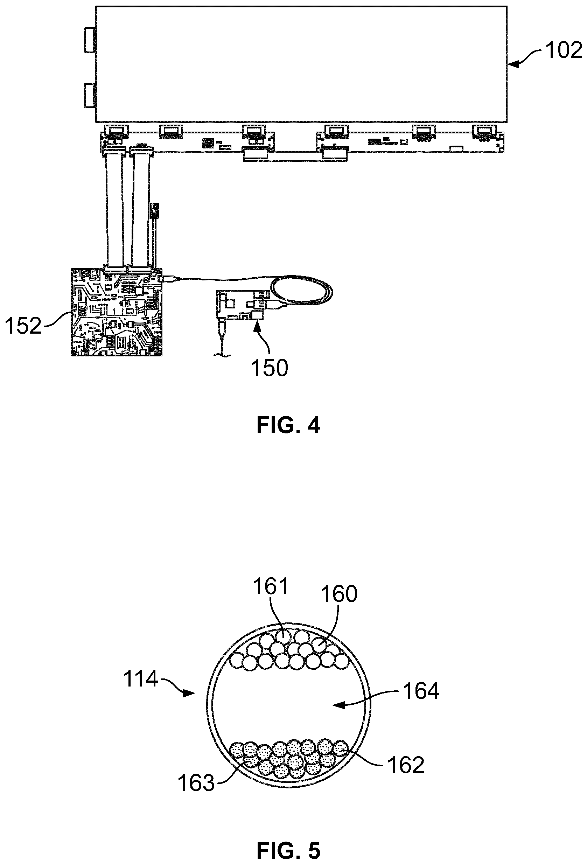

Figure 4 illustrates a schematic diagram of an electrophoretic display 102, according to an example of the present disclosure. A control unit 150 operates to control data that is sent to a driver card 152. The driver card 152 outputs voltage to the electrophoretic display 102 according to a bit map, for example. Positive, negative, and partial charges dictate which pigment is shown in a particular microcapsule of the electrophoretic display 102.

In at least one example, a method can also include coupling the electrophoretic display 102 to the driver card 152 (such as through one or more wired or wireless connections), and coupling the driver card 152 to the control unit 150 (such as through one or more wired or wireless connections). The control unit 150 can be operated to change the appearance of the electrophoretic display 102.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 150 may be or include one or more processors that are configured to control operation, as described herein.

The control unit 150 is configured to execute a set of instructions that are stored in one or more data storage units or elements (such as one or more memories), in order to process data. For example, the control unit 150 may include or be coupled to one or more memories. The data storage units may also store data or other information as desired or needed. The data storage units may be in the form of an information source or a physical memory element within a processing machine.

The set of instructions may include various commands that instruct the control unit 150 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 150. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 150 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 5 illustrates a simplified representation of a microcapsule 114, according to an example of the present disclosure. As an example, each microcapsule 114 includes negatively charged white pigment 160 within ink particles 161, and positively charged black pigment 162 within ink particles 163. The ink particles 161 and 163 are suspended in a clear fluid 164. As described herein, the pigments 160 and 162 can be manipulated by an electric field to create a changeable appearance.

Referring to Figures 1-5, the electrophoretic display 102 does not require power to retain a particular appearance. Instead, power is used to change the appearance of the electrophoretic display 102. Further, the electrophoretic display 102 can provide a reflective display in that ambient light from an environment is reflected from the display to eyes of an individual. The electrophoretic display 102 can also mimic appearance of traditional ink and paper. Unlike a liquid crystal display, no backlight is needed for the electrophoretic display 102. Further, the electrophoretic display 102 is easily readable in relation to sunlight, and at wide view angles.

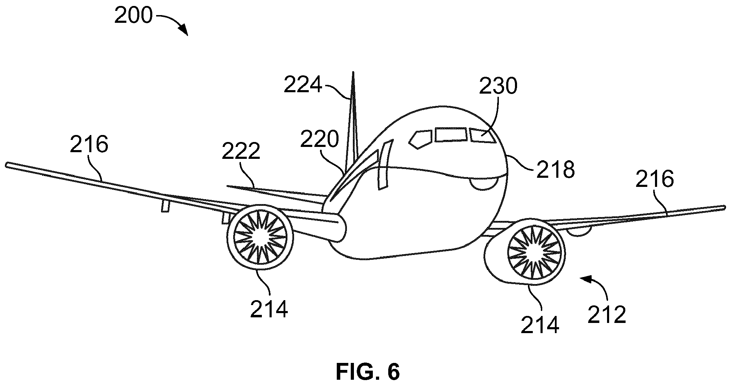

Figure 6 illustrates a perspective front view of an aircraft 200, according to an example of the present disclosure. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224. The fuselage 218 of the aircraft 200 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like. Referring to Figures 1-6, the aircraft 200 includes one or more electrophoretic displays 102, such as on outer surfaces of the fuselage 218, and/or within the internal cabin 230.

Figure 6 shows an example of an aircraft 200. It is to be understood that the aircraft 200 can be sized, shaped, and configured differently than shown in Figure 6. Optionally, examples of the present disclosure can be used with various other vehicles. For example, instead of an aircraft, the vehicle can be a land-based vehicle, such as an automobile, a bus, a train car, or the like. As another example, the vehicle can be a watercraft. As another example, the vehicle can be a spacecraft. Optionally, examples of the present disclosure can be used with fixed structures, such as residential or commercial buildings.

Further, the disclosure comprises examples according to the following clauses:
Clause 1. A method for providing an electrophoretic display, the method comprising:
   applying one or more fluids onto a surface of a substrate, wherein the one or more fluids comprise a conductive coating, microcapsules, and a clear coat,
   wherein said applying forms the electrophoretic display on the surface of the substrate.
Clause 2. The method of Clause 1, wherein the substate is on or within an aircraft.
Clause 3. The method of Clauses 1 or 2, wherein said applying comprises using an applicator having one or more nozzles, wherein the one or more fluids are emitted from the one or more nozzles.
Clause 4. The method of Clause 3, wherein the applicator comprises an inkjet printhead or a paint atomizer.
Clause 5. The method of Clauses 3 or 4, wherein the applicator is a robot including a base, one or more articulating arms, and an end effector including the one or more nozzles.
Clause 6. The method of any of Clauses 1-5, wherein the one or more fluids comprise one or more paints.
Clause 7. The method of any of Clauses 1-6, wherein said applying comprises applying a single fluid including the conductive coating, the microcapsules, and the clear coat onto the surface of the substrate.
Clause 8. The method of any of Clauses 1-6, wherein said applying comprises:
   applying a first fluid including the conductive coating onto the surface of the substrate;
   applying a second fluid including the microcapsules over the conductive coating; and
   applying a third fluid including the clear coat over the microcapsules.
Clause 9. The method of any of Clauses 1-6, wherein said applying comprises:
   applying a first fluid including the conductive coating and the microcapsules onto the surface of the substrate; and
   applying a second fluid including the clear coat over the conductive coating and the microcapsules.
Clause 10. The method of any of Clauses 1-6, wherein said applying comprises:
   applying a first fluid including the conductive coating onto the surface of the substrate; and
   applying a second fluid including the microcapsules and the clear coat over the conductive coating.
Clause 11. The method of any of Clauses 1-10, further comprising:
   coupling the electrophoretic display to a driver card; and
   coupling the driver card to a control unit.
Clause 12. The method of any of Clauses 1-11, wherein the microcapsules comprise charged particles within ink particles suspended in a clear fluid.
Clause 13. A system for providing an electrophoretic display, the system comprising:
   an applicator configured to apply one or more fluids onto a surface of a substrate, wherein the one or more fluids comprise a conductive coating, microcapsules, and a clear coat,
   wherein the electrophoretic display is formed on the surface of the substrate by the one or more fluids applied by the applicator.
Clause 14. The system of Clause 13, wherein the applicator includes one or more nozzles, wherein the one or more fluids are emitted from the one or more nozzles.
Clause 15. The system of Clause 14, wherein the applicator is a robot including a base, one or more articulating arms, and an end effector including the one or more nozzles.
Clause 16. The system of any of Clauses 13-15, wherein the applicator comprises an inkjet printhead or a paint atomizer.
Clause 17. The system of any of Clauses 13-16, wherein the one or more fluids comprise one or more paints.
Clause 18. The system of any of Clauses 13-17, wherein each of the microcapsules comprises charged particles within ink particles suspended in a clear fluid.
Clause 19. A method for providing an electrophoretic display, the method comprising:
   applying one or more fluids onto a surface of a substrate, wherein the one or more fluids comprise a conductive coating, microcapsules, and a clear coat, wherein the microcapsules comprise charged particles within ink particles suspended in a clear fluid, wherein said applying comprises using a robot including a base, one or more articulating arms, and an end effector including one or more nozzles, wherein the one or more fluids are emitted from the one or more nozzles, and wherein said applying forms the electrophoretic display on the surface of the substrate;
   coupling the electrophoretic display to a driver card; and
   coupling the driver card to a control unit.
Clause 20. The method of Clause 19, wherein said applying comprises applying a single fluid including the conductive coating, the microcapsules, and the clear coat onto the surface of the substrate.
Clause 21. The method of Clause 19, wherein said applying comprises:
   applying a first fluid including the conductive coating onto the surface of the substrate;
   applying a second fluid including the microcapsules over the conductive coating; and
   applying a third fluid including the clear coat over the microcapsules.
Clause 22. The method of Clause 19, wherein said applying comprises:
   applying a first fluid including the conductive coating and the microcapsules onto the surface of the substrate; and
   applying a second fluid including the clear coat over the conductive coating and the microcapsules.
Clause 23. The method of Clause 19, wherein said applying comprises:
   applying a first fluid including the conductive coating onto the surface of the substrate; and
   applying a second fluid including the microcapsules and the clear coat over the conductive coating.

As described herein, examples of the present disclosure provide systems and methods for forming a dynamic display, such as can be used within an interior cabin of a vehicle. Further, examples of the present disclosure provide effective and efficient dynamic displays that are lighter and/or smaller than typical electronic displays, and which use less power than typical electronic displays.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method for providing an electrophoretic display, the method comprising:
applying (132) one or more fluids (110) onto a surface (111) of a substrate (104), wherein the one or more fluids (110) comprise a conductive coating (112), microcapsules (114), and a clear coat (116),
wherein said applying (132) forms the electrophoretic display (102) on the surface (111) of the substrate (104).

2. The method of claim 1, wherein the substate is on or within an aircraft (200).

3. The method of claim 1 or 2, wherein said applying (132) comprises using an applicator (106) having one or more nozzles (108), wherein the one or more fluids (110) are emitted from the one or more nozzles (108).

4. The method of claim 3, wherein the applicator (106) is a robot (140) including a base (142), one or more articulating arms (144), and an end effector (146) including the one or more nozzles (108).

5. The method of any preceding claim, wherein said applying (132) comprises applying (132) a single fluid including the conductive coating (112), the microcapsules (114), and the clear coat (116) onto the surface (111) of the substrate (104).

6. The method of any of claims 1 to 4, wherein said applying (132) comprises:
applying (132) a first fluid including the conductive coating (112) onto the surface (111) of the substrate (104);
applying (132) a second fluid including the microcapsules (114) over the conductive coating (112); and
applying (132) a third fluid including the clear coat (116) over the microcapsules (114).

7. The method of any of claim 1 to 4, wherein said applying (132) comprises:
applying (132) a first fluid including the conductive coating (112) and the microcapsules (114) onto the surface (111) of the substrate (104); and
applying (132) a second fluid including the clear coat (116) over the conductive coating (112) and the microcapsules (114).

8. The method of any of claim 1 to 4, wherein said applying (132) comprises:
applying (132) a first fluid including the conductive coating (112) onto the surface (111) of the substrate (104); and
applying (132) a second fluid including the microcapsules (114) and the clear coat (116) over the conductive coating (112).

9. The method of any preceding claim, further comprising:
coupling the electrophoretic display (102) to a driver card (152); and
coupling the driver card (152) to a control unit (150).

10. A system (100) for providing an electrophoretic display, the system (100) comprising:
an applicator (106) configured to apply one or more fluids (110) onto a surface (111) of a substrate (104), wherein the one or more fluids (110) comprise a conductive coating (112), microcapsules (114), and a clear coat (116),
wherein the electrophoretic display (102) is formed on the surface (111) of the substrate (104) by the one or more fluids (110) applied by the applicator (106).

11. The system (100) of claim 10, wherein the applicator (106) includes one or more nozzles (108), wherein the one or more fluids (110) are emitted from the one or more nozzles (108).

12. The system (100) of claim 11, wherein the applicator (106) is a robot (140) including a base (142), one or more articulating arms (144), and an end effector (146) including the one or more nozzles (108).

13. The system (100) of any of claims 10 to 12 or the method of any of claims 3 to 9, wherein the applicator (106) comprises an inkjet printhead or a paint atomizer.

14. The system (100) of any of claims 10 to 13 or the method of any of claims 1 to 9, wherein the one or more fluids (110) comprise one or more paints.

15. The system (100) of any of claims 10 to 14 or the method of any of claims 1 to 9, wherein each of the microcapsules (114) comprises charged particles within ink particles (161, 163) suspended in a clear fluid (164).
